(19) Europäisches Patentamt
European Patent Office
Office européen des brevets

(11) EP 1 214 881 B1

(12) EUROPÄISCHE PATENTSCHRIFT

(45) Veröffentlichungstag und Bekanntmachung des Hinweises auf die Patenterteilung:
**07.05.2003 Patentblatt 2003/19**

(51) Int Cl.[7]: **A01N 43/40**
// (A01N43/40, 37:06)

(21) Anmeldenummer: **01128597.0**

(22) Anmeldetag: **30.11.2001**

# (54) Fungizide Mischungen auf der Basis von Amidverbindungen

Fungicidal mixtures based upon amid compounds

Mélanges fongicides à base de composés amides

(84) Benannte Vertragsstaaten:
**AT BE CH CY DE DK ES FI FR GB GR IE IT LI LU MC NL PT SE TR**

(30) Priorität: **14.12.2000 DE 10062327**

(43) Veröffentlichungstag der Anmeldung:
**19.06.2002 Patentblatt 2002/25**

(73) Patentinhaber: **BASF AKTIENGESELLSCHAFT**
**67056 Ludwigshafen (DE)**

(72) Erfinder:
- **Eicken, Karl, Dr.**
**67157 Wachenheim (DE)**
- **Ammermann, Eberhard, Dr.**
**64646 Heppenheim (DE)**
- **Stierl, Reinhard, Dr.**
**67112 Mutterstadt (DE)**
- **Lorenz, Gisela, Dr.**
**67434 Hambach (DE)**
- **Strathmann, Siegfried, Dr.**
**67117 Limburgerhof (DE)**
- **Scherer, Maria**
**76289 Landau (DE)**
- **Schelberger, Klaus**
**67161 Gönnheim (DE)**
- **Hampel, Manfred, Dr.**
**67435 Neustadt (DE)**

(56) Entgegenhaltungen:
**EP-A- 0 707 792** **WO-A-97/39630**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft fungizide Mischungen, enthaltend

A) eine Amidverbindung der Formel I

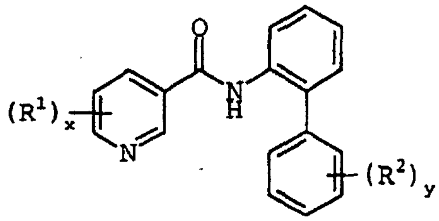

I

worin

$R^1$, $R^2$ gleich oder verschieden sind und für Halogen, Nitro, Cyano, $C_1$-$C_8$-Alkyl, $C_2$-$C_8$-Alkenyl, $C_2$-$C_8$-Alkinyl, $C_1$-$C_8$-Halogenalkyl, $C_2$-$C_8$-Halogenalkenyl, $C_2$-$C_8$-Halogenalkinyl, $C_1$-$C_8$-Alkoxy, $C_1$-$C_8$-Halogenalkoxy, $C_1$-$C_8$-Halogenalkylthio, $C_1$-$C_8$-Alkylsulfinyl oder $C_1$-$C_8$-Alkylsulfonyl stehen;

x 1, 2, 3 oder 4;

y 1, 2, 3, 4 oder 5;

und

B) Dinitrophenolderivate II der Formeln II.a und II.b

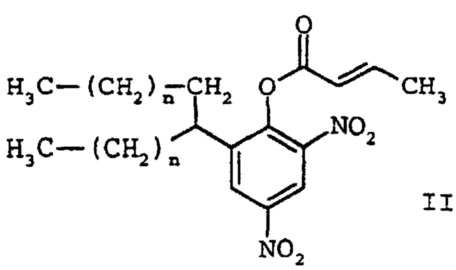

II.a

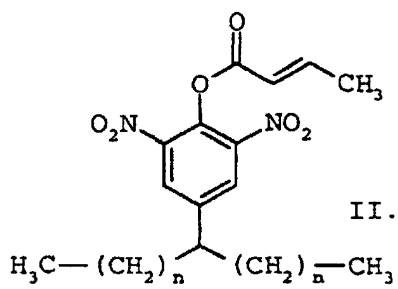

II.b

wobei n für 0, 1 oder 2 steht,

in einer synergistisch wirksamen Menge.

Außerdem betrifft die Erfindung Verfahren zur Bekämpfung von Schadpilzen mit Mischungen der Verbindungen I und II und die Verwendung der Verbindungen I und II zur Herstellung derartiger Mischungen.

Die Verbindungen der Formel I, ihre Herstellung und ihre Wirkung gegen Schadpilze sind aus der Literatur bekannt (EP-A 545 099).

Ebenfalls bekannt ist die Mischung der Verbindungen II (II.a und II.b) (common name: Dinocap), deren Herstellung und deren Wirkung gegen Schadpilze und Spinnentiere (US 2,526,660; US 2,810,767).

Im Hinblick auf eine Senkung der Aufwandmengen und eine Verbesserung des Wirkungsspektrums der bekannten Verbindungen I und II lagen der vorliegenden Erfindung Mischungen als Aufgabe zugrunde, die bei verringerter Gesamtmenge an ausgebrachten Wirkstoffen eine verbesserte Wirkung gegen Schadpilzen aufweisen (synergistische Mischungen).

Demgemäß wurden die eingangs definierte Mischungen gefunden. Es wurde außerdem gefunden, daß sich bei gleichzeitiger, und zwar gemeinsamer oder getrennter Anwendung der Verbindungen I und der Verbindungen II oder bei Anwendung der Verbindungen I und der Verbindungen II nacheinander Schadpilze besser bekämpfen lassen, als mit den Einzelverbindungen allein.

Die erfindungsgemäßen Mischungen wirken synergistisch und sind daher zur Bekämpfung von Schadpilzen

und insbesondere von echten Mehltaupilzen in Getreide, Gemüse, Obst, Zierpflanzen und Reben besonders geeignet.

Die Formel I repräsentiert insbesondere Verbindungen, in denen $R^1$ in 2-Stellung und $R^2$ in 4-Stellung vorliegen (Formel I.1) :

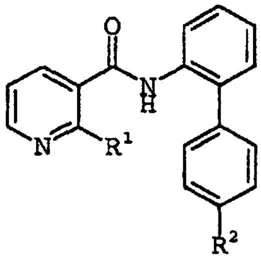

I.1

Besonders bevorzugt sind Verbindungen der Formel I.1, in denen die Kombination der Substituenten einer Zeile der folgenden Tabelle I entspricht:

| **Nr.** | **$R^1$** | **$R^2$** |
|---|---|---|
| I-1 | F | F |
| I-2 | F | Cl |
| I-3 | F | Br |
| I-4 | Cl | F |
| I-5 | Cl | Cl |
| I-6 | Cl | Br |
| I-7 | $CF_3$ | F |
| I-8 | $CF_3$ | Cl |
| I-9 | $CF_3$ | Br |
| I-10 | $CF_2H$ | F |
| I-11 | $CF_2H$ | Cl |
| I-12 | $CF_2H$ | Br |
| I-13 | $CH_3$ | F |
| I-14 | $CH_3$ | Cl |
| I-15 | $CH_3$ | Br |
| I-16 | $OCH_3$ | F |
| I-17 | $OCH_3$ | Cl |
| I-18 | $OCH_3$ | Br |
| I-19 | $SCH_3$ | F |
| I-20 | $SCH_3$ | Cl |
| I-21 | $SCH_3$ | Br |
| I-22 | $S(O)CH_3$ | F |
| I-23 | $S(O)CH_3$ | Cl |
| I-24 | $S(O)CH_3$ | Br |
| I-25 | $SO_2CH_3$ | F |
| I-26 | $SO_2CH_3$ | Cl |

(fortgesetzt)

| Nr. | $R^1$ | $R^2$ |
|---|---|---|
| I-27 | $SO_2CH_3$ | Br |

Besonders bevorzugt werden die Verbindungen I.1, in denen $R^1$ für $CF_3$ oder Halogen und $R^2$ für Halogen stehen.

Bevorzugt setzt man bei der Bereitstellung der Mischungen die reinen Wirkstoffe I und die Mischung der Verbindungen II.a und II.b ein, denen man weitere Wirkstoffe gegen Schadpilze oder gegen andere Schädlinge wie Insekten, Spinntiere oder Nematoden oder auch herbizide oder wachstumsregulierende Wirkstoffe oder Düngemittel beimischen kann.

Die Mischungen aus den Verbindungen I und II bzw. die Verbindungen I und II gleichzeitig, gemeinsam oder getrennt angewandt, zeichnen sich durch eine hervorragende Wirkung gegen ein breites Spektrum von pflanzenpathogenen Pilzen, insbesondere aus der Klasse der Ascomyceten, Basidiomyceten, Phycomyceten und Deuteromyceten aus. Sie sind z.T. systemisch wirksam und können daher auch als Blatt- und Bodenfungizide eingesetzt werden.

Besondere Bedeutung haben sie für die Bekämpfung einer Vielzahl von Pilzen an verschiedenen Kulturpflanzen wie Baumwolle, Gemüsepflanzen (z.B. Gurken, Bohnen, Tomaten, Kartoffeln und Kürbisgewächse), Gerste, Gras, Hafer, Bananen, Kaffee, Mais, Obstpflanzen, Reis, Roggen, Soja, Wein, Weizen, Zierpflanzen, Zuckerrohr sowie an einer Vielzahl von Samen.

Insbesondere eignen sie sich zur Bekämpfung der folgenden pflanzenpathogenen Pilze: Erysiphe graminis (echter Mehltau) an Getreide, Erysiphe cichoracearum und Sphaerotheca fuliginea an Kürbisgewächsen, Podosphaera leucotricha an Äpfeln, Uncinula necator an Reben, Puccinia-Arten an Getreide, Rhizoctonia-Arten an Baumwolle, Reis und Rasen, Ustilago-Arten an Getreide und Zukkerrohr, Venturia inaequalis (Schorf) an Äpfeln, Helminthosporium-Arten an Getreide, Septoria nodorum an Weizen, Botrytis cinera (Grauschimmel) an Erdbeeren, Gemüse, Zierpflanzen und Reben, Cercospora arachidicola an Erdnüssen, Pseudocercosporella herpotrichoides an Weizen und Gerste, Pyricularia oryzae an Reis, Phytophthora infestans an Kartoffeln und Tomaten, Plasmopara viticola an Reben, Pseudocercosporella-Arten in Hopfen und Gurken, Alternaria-Arten an Gemüse und Obst, Mycosphaerella-Arten in Bananen sowie Fusarium- und Verticillium-Arten.

Sie sind außerdem im Materialschutz (z.B. Holzschutz) anwendbar, beispielsweise gegen Paecilomyces variotii.

Die Verbindungen I und II können gleichzeitig, und zwar gemeinsam oder getrennt, oder nacheinander aufgebracht werden, wobei die Reihenfolge bei getrennter Applikation im allgemeinen keine Auswirkung auf den Bekämpfungserfolg hat.

Die Verbindungen I und II werden üblicherweise in einem Gewichtsverhältnis von 20:1 bis 1:20, insbesondere 10:1 bis 1:10, vorzugsweise 5:1 bis 1:5 angewendet.

Die Aufwandmengen der erfindungsgemäßen Mischungen liegen, vor allem bei landwirtschaftlichen Kulturflächen, je nach Art des gewünschten Effekts bei 0,01 bis 8 kg/ha, vorzugsweise 0,1 bis 5 kg/ha, insbesondere 0,5 bis 3,0 kg/ha.

Die Aufwandmengen liegen dabei für die Verbindungen I bei 0,01 bis 2,5 kg/ha, vorzugsweise 0,05 bis 2,5 kg/ha, insbesondere 0,05 bis 1,0 kg/ha.

Die Aufwandmengen für die Verbindungen II liegen entsprechend bei 0,01 bis 10 kg/ha, vorzugsweise 0,05 bis 5 kg/ha, insbesondere 0,1 bis 2,0 kg/ha.

Bei der Saatgutbehandlung werden im allgemeinen Aufwandmengen an Mischung von 0,001 bis 250 g/kg Saatgut, vorzugsweise 0,01 bis 100 g/kg, insbesondere 0,01 bis 50 g/kg verwendet.

Sofern für Pflanzen pathogene Schadpilze zu bekämpfen sind, erfolgt die getrennte oder gemeinsame Applikation der Verbindungen I und II oder der Mischungen aus den Verbindungen I und II durch Besprühen oder Bestäuben der Samen, der Pflanzen oder der Böden vor oder nach der Aussaat der Pflanzen oder vor oder nach dem Auflaufen der Pflanzen.

Die erfindungsgemäßen fungiziden synergistischen Mischungen bzw. die Verbindungen I und II können beispielsweise in Form von direkt versprühbaren Lösungen, Pulver und Suspensionen oder in Form von hochprozentigen wäßrigen, öligen oder sonstigen Suspensionen, Dispersionen, Emulsionen, Öldispersionen, Pasten, Stäubemitteln, Streumitteln oder Granulaten aufbereitet und durch Versprühen, Vernebeln, Verstäuben, Verstreuen oder Gießen angewendet werden. Die Anwendungsform ist abhängig vom Verwendungszweck; sie soll in jedem Fall eine möglichst feine und gleichmäßige Verteilung der erfindungsgemäßen Mischung gewährleisten.

Die Formulierungen werden in an sich bekannter Weise hergestellt, z.B. durch Zugabe von Lösungsmitteln und/oder Trägerstoffen. Den Formulierungen werden üblicherweise inerte Zusatzstoffe wie Emulgiermittel oder Dispergiermittel beigemischt.

Als oberflächenaktive Stoffe kommen die Alkali-, Erdalkali-, Ammoniumsalze von aromatischen Sulfonsäuren, z.B. Lignin-, Phenol-, Naphthalin- und Dibutylnaphthalinsulfonsäure, sowie von Fettsäuren, Alkyl- und Alkylarylsulfonaten, Alkyl-, Lauryletherund Fettalkoholsulfaten, sowie Salze sulfatierter Hexa-, Heptaund Octadecanole oder Fettalkoholglycolethern, Kondensationsprodukte von sulfoniertem Naphthalin und seinen Derivaten mit Formaldehyd. Kondensationsprodukte des Naphthalins bzw. der Naphthalinsulfonsäuren mit Phenol und Formaldehyd, Polyoxyethylenoctylphenolether, ethoxyliertes Isooctyl-, Octyl- oder Nonylphenol, Alkylphenol- oder Tributylphenylpolyglycolether, Alkylarylpolyetheralkohole, Isotridecylalkohol, Fettalkoholethylenoxid- Kondensate, ethoxyliertes Rizinusöl, Polyoxyethylenalkylether oder Polyoxypropylen, Laurylalkoholpolyglycoletheracetat, Sorbitester, Lignin-Sulfitablaugen oder Methylcellulose in Betracht.

Pulver Streu- und Stäubemittel können durch Mischen oder gemeinsames Vermahlen der Verbindungen I oder II oder der Mischung aus den Verbindungen I und II mit einem festen Trägerstoff hergestellt werden.

Granulate (z.B. Umhüllungs-, Imprägnierungs- oder Homogengranulate) werden üblicherweise durch Bindung des Wirkstoffs oder der Wirkstoffe an einen festen Trägerstoff hergestellt.

Als Füllstoffe bzw. feste Trägerstoffe dienen beispielsweise Mineralerden wie Silicagel, Kieselsäuren, Kieselgele, Silikate, Talkum, Kaolin, Kalkstein, Kalk, Kreide, Bolus, Löß, Ton, Dolomit, Diatomeenerde, Calcium- und Magnesiumsulfat, Magnesiumoxid, gemahlene Kunststoffe, sowie Düngemittel wie Ammoniumsulfat, Ammoniumphosphat, Ammoniumnitrat, Harnstoffe und pflanzliche Produkte wie Getreidemehl, Baumrinden-, Holz- und Nußschalenmehl, Cellulosepulver oder andere feste Trägerstoffe.

Die Formulierungen enthalten im allgemeinen 0,1 bis 95 Gew.-%, vorzugsweise 0,5 bis 90 Gew.-% einer der Verbindungen I oder II bzw. der Mischung aus den Verbindungen I und II. Die Wirkstoffe werden dabei in einer Reinheit von 90% bis 100%, vorzugsweise 95% bis 100% (nach NMR- oder HPLC-Spektrum) eingesetzt.

Die Anwendung der Verbindungen I oder II, der Mischungen oder der entsprechenden Formulierungen erfolgt so, daß man die Schadpilze, deren Lebensraum oder die von ihnen freizuhaltenden Pflanzen, Samen, Böden, Flächen, Materialien oder Räume mit einer fungizid wirksamen Menge der Mischung, bzw. der Verbindungen I und II bei getrennter Ausbringung, behandelt.

Die Anwendung kann vor oder nach dem Befall durch die Schadpilze erfolgen.

Anwendungsbeispiele

Die synergistische Wirkung der erfindungsgemäßen Mischungen ließ sich durch die folgenden Versuche zeigen:

Die Wirkstoffe wurden getrennt oder gemeinsam als 10 %-ige Emulsion in einem Gemisch aus 70 Gew.-% Cyclohexanon, 20 Gew.-% Nekanil® LN (Lutensol® AP6, Netzmittel mit Emulgier- und Dispergierwirkung auf der Basis ethoxylierter Alkylphenole) und 10 Gew.-% Emulphor® EL (Emulan® EL, Emulgator auf der Basis ethoxylierter Fettalkohole) aufbereitet und entsprechend der gewünschten Konzentration mit Wasser verdünnt.

Die Auswertung erfolgte durch Feststellung der befallenen Blattflächen in Prozent. Diese Prozent-Werte wurden in Wirkungsgrade umgerechnet. Der Wirkungsgrad (W) wurde nach der Formel von Abbot wie folgt bestimmt:

$$W = (1 - \alpha)\cdot 100/\beta$$

$\alpha$ entspricht dem Pilzbefall der behandelten Pflanzen in % und

$\beta$ entspricht dem Pilzbefall der unbehandelten (Kontroll-) Pflanzen in %

Bei einem Wirkungsgrad von 0 entspricht der Befall der behandelten Pflanzen demjenigen der unbehandelten Kontrollpflanzen; bei einem Wirkungsgrad von 100 wiesen die behandelten Pflanzen keinen Befall auf.

Die zu erwartenden Wirkungsgrade der Wirkstoffmischungen wurden nach der Colby Formel [R.S. Colby, Weeds 15, 20-22 (1967)] ermittelt und mit den beobachteten Wirkungsgraden verglichen.

$$\text{Colby Formel: } E = x + y - x\cdot y/100$$

E zu erwartender Wirkungsgrad, ausgedrückt in % der unbehandelten Kontrolle, beim Einsatz der Mischung aus den Wirkstoffen A und B in den Konzentrationen a und b

x der Wirkungsgrad, ausgedrückt in % der unbehandelten Kontrolle, beim Einsatz des Wirkstoffs A in der Konzentration a

y der Wirkungsgrad, ausgedrückt in % der unbehandelten Kontrolle, beim Einsatz des Wirkstoffs B in der Konzentration b

Die Ergebnisse der Wirksamkeit gegen Weizenmehltau sind den nachfolgenden Beispielen zu entnehmen:

Anwendungsbeispiel 1: Wirksamkeit gegen Weizenmehltau

Blätter von in Töpfen gewachsenen Weizenkeimlingen der Sorte "Kanzler" wurden mit wäßriger Wirkstoffaufbereitung, die aus einer Stammlösung bestehend aus 10 % Wirkstoff, 85 % Cyclohexanon und 5 % Emulgiermittel angesetzt wurde, bis zur Tropfnässe besprüht und 24 Stunden nach dem Antrocknen des Spritzbelages mit Sporen des Weizenmehltaus (Blumeria graminis forma specialis tritici) bestäubt. Die Versuchspflanzen wurden anschließend im Gewächshaus bei Temperaturen zwischen 20 und 24°C und 60 bis 90 % relativer Luftfeuchtigkeit aufgestellt. Nach 7 Tagen wurde das Ausmaß der Mehltauentwicklung visuell in % Befall der gesamten Blattfläche ermittelt. Die %-Werte wurden in Wirkungsgrade umgerechnet.

Tabelle A -

| Einzelwirkstoffe | | | |
|---|---|---|---|
| Beispiel | Wirkstoff | Wirkstoffkonzentration in der Spritzbrühe [ppm] | Wirkungsgrad in % der unbehandelten Kontrolle |
| 1 | Kontrolle (unbehandelt) | (100% Befall) | 0 |
| 2 | I-4 | 50<br>3 | 30<br>20 |
| 3 | I-5 | 50<br>3 | 0<br>0 |
| 4 | Dinocap (II) | 50<br>12,5<br>6 | 70<br>10<br>10 |

Tabelle B -

| erfindungsgemäße Kombinationen | | | |
|---|---|---|---|
| Beispiel | Wirkstoffmischung Konzentration Mischungsverhältnis | beobachteter Wirkungsgrad | berechneter Wirkungsgrad*) |
| 5 | I-4 + II<br>50 + 12,5 ppm<br>4 : 1 | 60 | 37 |
| 6 | I-4 + II<br>50 + 6 ppm<br>8 : 1 | 50 | 37 |
| 7 | I-4 + II<br>3 + 50 ppm<br>1 : 16 | 90 | 76 |
| 8 | I-5 + II<br>50 + 12,5 ppm<br>4 : 1 | 30 | 10 |
| 9 | I-5 + II<br>50 + 6 ppm<br>8 : 1 | 20 | 10 |

*) berechnet nach der Colby-Formel

Tabelle B - (fortgesetzt)

| erfindungsgemäße Kombinationen | | | |
|---|---|---|---|
| Beispiel | Wirkstoffmischung Konzentration Mischungsverhältnis | beobachteter Wirkungsgrad | berechneter Wirkungsgrad*) |
| 10 | I-5 + II<br>3 + 50 ppm<br>1 : 16 | 80 | 70 |

*) berechnet nach der Colby-Formel

Anwendungsbeispiel 2: Wirksamkeit gegen Gurkenmehltau

Blätter von in Töpfen gewachsenen Gurkenkeimlingen der Sorte "Chinesische Schlange" wurden im Keimblattstadium mit wäßriger Wirkstoffaufbereitung, die aus einer Stammlösung bestehend aus 10 % Wirkstoff, 85 % Cyclohexanon und 5 % Emulgiermittel angesetzt wurde, bis zur Tropfnässe besprüht. 20 Stunden nach dem Antrocknen des Spritzbelages wurden die Pflanzen mit einer wäßrigen Sporensuspension des Gurkenmehltaus (Sphaerotheca fuliginea) inokuliert. Anschließend wurden die Pflanzen im Gewächshaus bei Temperaturen zwischen 20 und 24°C und 60 bis 80 % relativer Luftfeuchtigkeit für 7 Tage kultiviert. Dann wurde das Ausmaß der Mehltauentwicklung visuell in %-Befall der Keimblattfläche ermittelt. Die %-Werte wurden in Wirkungsgrade umgerechnet.

Tabelle C -

| Einzelwirkstoffe | | | |
|---|---|---|---|
| Beispiel | Wirkstoff | Wirkstoffkonzentration in der Spritzbrühe [ppm] | Wirkungsgrad in % der unbehandelten Kontrolle |
| 11 | Kontrolle (unbehandelt) | (100% Befall) | 0 |
| 12 | I-5 | 50 | 0 |
| 13 | Dinocap (II) | 12,5<br>6 | 20<br>10 |

Tabelle D -

| erfindungsgemäße Kombinationen | | | |
|---|---|---|---|
| Beispiel | erfindungsgemäße Kombinationen | beobachteter Wirkungsgrad | berechneter Wirkungsgrad*) |
| 14 | I-5 + II<br>50 + 12,5 ppm<br>4 : 1 | 40 | 20 |
| 15 | I-5 + II<br>50 + 6 ppm<br>8 : 1 | 30 | 10 |

*) berechnet nach der Colby-Formel

Aus den Ergebnissen der Versuche geht hervor, daß der beobachtete Wirkungsgrad in allen Mischungsverhältnissen höher ist, als der nach der Colby-Formel vorausberechnete Wirkungsgrad.

**Patentansprüche**

**1.** Fungizide Mischungen, enthaltend

A) eine Amidverbindung der Formel I

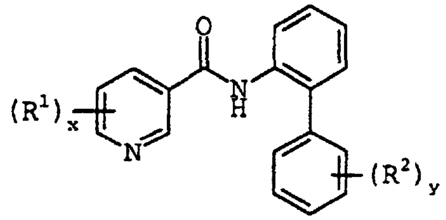

I

worin

$R^1$, $R^2$ gleich oder verschieden sind und für Halogen, Nitro, Cyano, $C_1$-$C_8$-Alkyl, $C_2$-$C_8$-Alkenyl, $C_2$-$C_8$-Alkinyl, $C_1$-$C_8$-Halogenalkyl, $C_2$-$C_8$-Halogenalkenyl, $C_2$-$C_8$-Halogenalkinyl, $C_1$-$C_8$-Alkoxy, $C_1$-$C_8$-Halogenalkoxy, $C_1$-$C_8$-Halogenalkylthio, $C_1$-$C_8$-Alkylsulfinyl oder $C_1$-$C_8$-Alkylsulfonyl stehen;

x 1, 2, 3 oder 4;

y 1, 2, 3, 4 oder 5;

und

B) Dinitrophenolderivate II der Formeln II.a und II.b

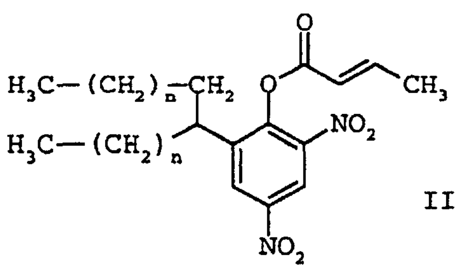

II.a

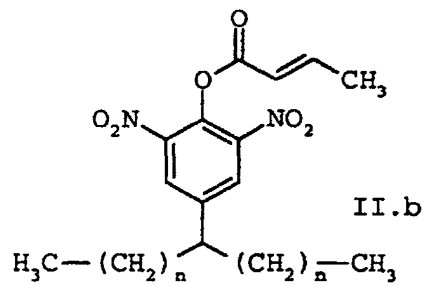

II.b

wobei n für 0, 1 oder 2 steht,

in einer synergistisch wirksamen Menge enthält.

2. Fungizide Mischung nach Anspruch 1, **dadurch gekennzeichnet, daß** das Gewichtsverhältnis der Verbindung I, zu den Verbindungen II 20:1 bis 1:20 beträgt.

3. Verfahren zur Bekämpfung von Schadpilzen, **dadurch gekennzeichnet, daß** man die Schadpilze, deren Lebensraum oder die von ihnen freizuhaltenden Pflanzen, Samen, Böden, Flächen, Materialien oder Räume mit einer Verbindung der Formel I, gemäß Anspruch 1 und den Verbindungen II gemäß Anspruch 1 behandelt.

4. Verfahren nach Anspruch 3, **dadurch gekennzeichnet, daß** man eine Verbindung I gemäß Anspruch 1 und die Verbindungen II gemäß Anspruch 1 gleichzeitig, und zwar gemeinsam oder getrennt, oder nacheinander ausbringt.

5. Verfahren nach Anspruch 3 oder 4, **dadurch gekennzeichnet, daß** man die Verbindung I gemäß Anspruch 1 in einer Menge von 0,01 bis 2,5 kg/ha aufwendet.

6. Verfahren nach den Ansprüchen 3 bis 5, **dadurch gekennzeichnet, daß** man die Verbindungen II gemäß Anspruch 1 in einer Menge von 0,01 bis 10 kg/ha aufwendet.

7. Verwendung einer Verbindung I gemäß Anspruch 1 zur Herstellung einer fungizid wirksamen synergistischen Mischung gemäß Anspruch 1.

8. Verwendung der Verbindungen II gemäß Anspruch 1 zur Herstellung einer fungizid wirksamen synergistischen

Mischung gemäß Anspruch 1.

**9.** Mittel nach Anspruch 1, das in zwei Teilen konditioniert ist, wobei der eine Teil eine Verbindung der Formel I gemäß Anspruch 1 in einem festen oder flüssigen Träger enthält und der andere Teil die Verbindungen II gemäß Anspruch 1 in einem festen oder flüssigen Träger enthält.

## Claims

**1.** A fungicidal mixture, comprising

A) an amide compound of the formula I

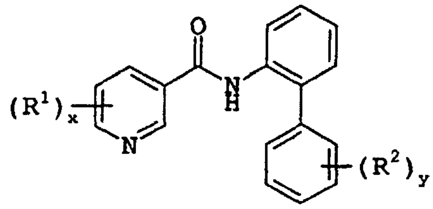

I

in which

$R^1$, $R^2$ are identical or different and are halogen, nitro, cyano, $C_1$-$C_8$-alkyl, $C_2$-$C_8$-alkenyl, $C_2$-$C_8$-alkynyl, $C_1$-$C_8$-haloalkyl, $C_2$-$C_8$-haloalkenyl, $C_2$-$C_8$-haloalkynyl, $C_1$-$C_8$-alkoxy, $C_1$-$C_8$-haloalkoxy, $C_1$-$C_8$-haloalkylthio, $C_1$-$C_8$-alkylsulfinyl or $C_1$-$C_8$-alkylsulfonyl;

x is 1, 2, 3 or 4;

y is 1, 2, 3, 4 or 5;

and

B) dinitrophenol derivatives of the formulae II.a and II.b

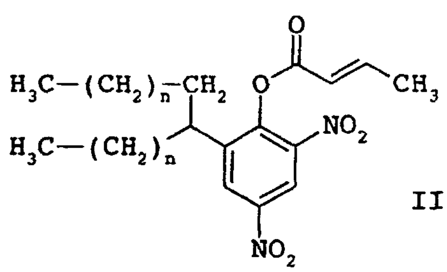

II.a

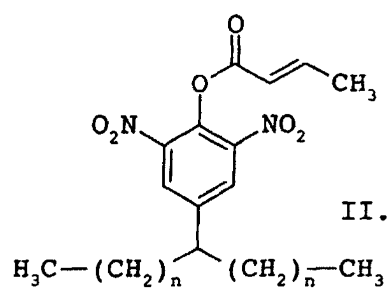

II.b

where n is 0, 1 or 2,

in a synergistically effective amount.

**2.** A fungicidal mixture as claimed in claim 1, wherein the weight ratio of compound I to compounds II is from 20:1 to 1:20.

**3.** A method for controlling harmful fungi, which comprises treating the harmful fungi, their habitat or the plants, seeds, soils, areas, materials or spaces to be kept free from them with a compound of the formula I as set forth in claim 1 and the compounds II as set forth in claim 1.

**4.** A method as claimed in claim 3, wherein a compound I as set forth in claim 1 and the compounds II as set forth in claim 1 are applied simultaneously, that is either together or separately, or successively.

**5.** A method as claimed in claim 3 or 4, wherein the compound I as set forth in claim 1 is applied in an amount of from 0.01 to 2.5 kg/ha.

**6.** A method as claimed in any of claims 3 to 5, wherein the compounds II as set forth in claim 1 is applied in an amount of from 0.01 to 10 kg/ha.

**7.** The use of a compound I as set forth in claim 1 for preparing a fungicidally effective synergistic mixture as claimed in claim 1.

**8.** The use of the compounds II as set forth in claim 1 for preparing a fungicidally effective synergistic mixture as claimed in claim 1.

**9.** A composition as claimed in claim 1 which is conditioned in two parts, one part comprising a compound of the formula I as set forth in claim 1 in a solid or liquid carrier and the other part comprising the compounds II as set forth in claim 1 in a solid or liquid carrier.

**Revendications**

**1.** Mélanges fongicides contenant

A) un amide de formule I

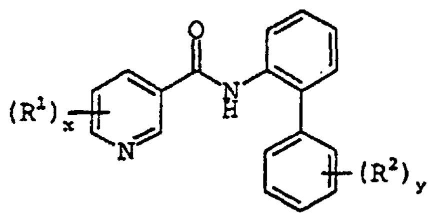

I

dans laquelle
$R^1$ et $R^2$, ayant des significations identiques ou différentes, représentent chacun un halogène, un groupe nitro, cyano, alkyle en C1-C8, alcényle en C2-C8, alcynyle en C2-C8, halogénoalkyle en C1-C8, halogénoalcényle en C2-C8, halogénoalcynyle en C2-C8, alcoxy en C1-C8, halogénoalcoxy en C1-C8, halogénoalkylthio en C1-C8, alkylsulfinyle en C1-C8 ou alkylsulfonyle en C1-C8 ;
x est égal à 1, 2, 3 ou 4 ;
y est égal à 1, 2, 3, 4 ou 5 ;
et

B) - des dérivés de dinitrophénols II de formules II.a et II.b

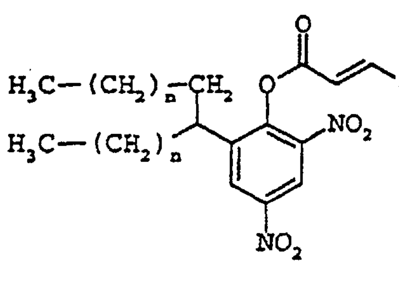

II.a

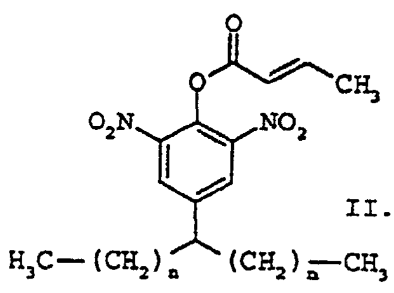

II.b

dans lesquelles n est égal à 0, 1 ou 2,

en quantité synergétique efficace.

2. Mélange fongicide selon la revendication 1, **caractérisé par le fait que** les proportions relatives en poids entre le composé I et les composés II vont de 20 : 1 à 1 : 20.

3. Procédé pour combattre les mycètes nuisibles, **caractérisé par le fait que** l'on traite les mycètes nuisibles, leur habitat ou les végétaux, semences, sols, aires, matériaux ou locaux qu'on veut protéger contre les mycètes nuisibles par un composé de formule I selon la revendication 1 et les composés II selon la revendication I.

4. Procédé selon la revendication 3, **caractérisé par le fait que** l'on applique en même temps, ensemble ou séparément, ou successivement, un composé I selon la revendication 1 et les composés II selon la revendication 1.

5. Procédé selon la revendication 3 ou 4, **caractérisé par le fait que** l'on applique le composé I selon la revendication 1 en quantité de 0,01 à 2,5 kg/ha.

6. Procédé selon les revendications 3 à 5, **caractérisé par le fait que** l'on applique les composés II selon la revendication 1 en quantité de 0,01 à 10 kg/ha.

7. Utilisation d'un composé I selon la revendication 1 pour la préparation d'un mélange fongicide à activité synergétique selon la revendication 1.

8. Utilisation des composés II selon la revendication 1 pour la préparation d'un mélange fongicide à activité synergétique selon la revendication 1.

9. Produit selon la revendication 1, conditionné en deux parties, l'une des deux parties contenant un composé de formule I selon la revendication 1 dans un véhicule solide ou liquide et l'autre les composés II selon la revendication 1 dans un véhicule solide ou liquide.